# FASCICULE DE BREVET EUROPEEN

(11) **EP 2 622 038 B1**
(45) Date de publication et mention de la délivrance du brevet: **17.01.2018**
(21) Numéro de dépôt: 11773763.5
(22) Date de dépôt: 23.09.2011
(51) Int. Cl.: C09J 153/02, B32B 7/12, B65D 77/20

(54) **FILM MULTICOUCHE POUR EMBALLAGE REFERMABLE**
MEHRSCHICHTIGE FOLIE FÜR WIEDERVERSCHLIESSBARE VERPACKUNG
MULTILAYER FILM FOR RESEALABLE PACKAGING

(30) Priorité: 27.09.2010 FR 1057740
(43) Date de publication de la demande: 07.08.2013
(73) Titulaire: BOSTIK SA, 93210 La Plaine Saint Denis (FR)
(72) Inventeur: NOTTEAU, Christophe, F-60400 Noyon (FR); ROBERT, Christophe, F-60150 Thourotte (FR)
(74) Mandataire: Granet, Pierre
(86) Numéro de dépôt international: PCT/FR2011/052220
(87) Numéro de publication internationale: WO 2012/045951

(56) Documents cités:
- EP-A1- 2 033 776
- EP-A1- 2 123 444
- WO-A1-02/064694

## Description

La présente invention a pour objet un film multicouche comprenant une couche constituée par une composition auto-adhésive thermofusible extrudable, un procédé de fabrication dudit film ainsi que son utilisation pour la fabrication d'emballages (ou barquettes) refermables, destinés en particulier au conditionnement de denrées alimentaires, notamment périssables.

Les barquettes refermables sont utilisées dans l'industrie agroalimentaire et la grande distribution pour conditionner des denrées périssables, notamment des produits frais. De tels emballages sont décrits par les brevets et demandes de brevets US 4673601, EP 1053952, WO 02/064694.

Après une première ouverture de l'emballage et consommation d'une partie du produit alimentaire qu'il contient, l'utilisateur peut manuellement refermer l'emballage de façon substantiellement hermétique et assurer par conséquent, le cas échéant après mise au réfrigérateur, la conservation de la portion restante du produit. Une succession de réouvertures et de refermetures est également possible.

Ces emballages comprennent en général un contenant (ou réceptacle) et un opercule formant couvercle, qui sont fixés l'un à l'autre hermétiquement par soudage.

Le réceptacle, plus ou moins profond et relativement rigide, est constitué d'une feuille multicouche (dite également complexe ou composite) ayant une épaisseur minimale de 200 µm, en général comprise entre 200 et 1000 µm. Cette feuille est thermoformée de manière à présenter un fond plan sur lequel repose le produit alimentaire et un pourtour en forme de bande plane. Ce pourtour, généralement parallèle au fond, est lié par soudure à l'opercule, souple et plan, qui est constitué d'un film multicouche (qualifié également de complexe ou composite) d'épaisseur en général comprise entre 40 et 150 µm, et qui est désigné parfois par la dénomination de film d'operculage.

Lors de l'ouverture de l'emballage, le film d'operculage est séparé manuellement du réceptacle au niveau de la bande plane du pourtour. Cette opération laisse apparaître une couche adhésive au niveau de cette bande plane, tant sur la bande d'opercule que sur la bande de réceptacle qui étaient précédemment en contact. Ces 2 couches adhésives (continues ou discontinues) « dites filles » résultent de la rupture d'une couche adhésive initiale ou « mère » ou, éventuellement, de sa séparation (ou décollement) de l'une des 2 couches du film complexe multicouche qui lui sont adjacentes. La couche adhésive initiale est donc une des couches dudit film complexe multicouche qui est lui-même un élément compris soit dans la feuille composite qui constitue le réceptacle soit, éventuellement, dans le film d'operculage.

Les 2 couches adhésives filles qui sont présentes, après ouverture de l'emballage, sur les bandes situées sur le pourtour respectif du réceptacle et de l'opercule sont donc en regard l'une de l'autre. Ainsi, il suffit de repositionner l'opercule sur le réceptacle, conformément à leur position dans l'emballage avant ouverture, afin de remettre en contact les 2 bandes de couches adhésives filles. Une simple pression manuelle permet alors d'obtenir la refermeture de l'emballage.

La substance adhésive qui constitue les couches adhésives mère et filles est donc nécessairement un adhésif sensible à la pression (également dénommé auto-adhésif ou encore PSA, de l'anglais « Pressure Sensitive Adhesive »).

La facilité d'ouverture de tels emballages est étroitement liée aux propriétés du PSA et plus particulièrement à la force qu'il faut appliquer, lors de l'ouverture de l'emballage (ci-après dénommée première ouverture), pour obtenir la rupture de la couche adhésive mère et/ou sa séparation d'une des 2 couches qui lui sont adjacentes dans le film composite multicouche mentionné précédemment.

La capacité de l'emballage à se refermer et la qualité de la refermeture obtenue (ci-après dénommée première refermeture) sont également importantes pour disposer à nouveau d'un emballage substantiellement hermétique et donc apte à assurer la conservation de son contenu. La qualité de la première refermeture est également étroitement liée aux propriétés du PSA. Elle est évaluée par la force qu'il faut appliquer, lors de la ré-ouverture (désignée ci-après par deuxième ouverture), pour obtenir à nouveau la rupture et/ou le décollement de la couche adhésive qui a été formée par le repositionnement des 2 couches adhésives filles, suivi par la pression manuelle appliquée sur le pourtour de l'emballage.

Le brevet US 4673601 décrit un film composite utilisable pour la fabrication d'emballages refermables comprenant une couche adhésive à base d'adhésifs thermofusibles, par exemple des copolymères d'Ethylène et d'Acétate de Vinyle (EVA) et des copolymères blocs Styrène/Butadiène/Styrène (SBS) et Styrène/Isoprène/Styrène (SIS).

La demande de brevet EP 1053952 enseigne un emballage refermable avec un contenant qui comprend une couche complexable, une couche d'adhésif et une couche soudante déchirable. Cet adhésif est un auto-adhésif qui est décrit de manière très générale.

La demande internationale WO 02/064694 divulgue un film multicouche comprenant une couche adhésive constituée d'une composition auto-adhésive thermofusible comprenant 65 % d'un mélange de copolymères blocs styréniques de type Styrène-Isoprène-Styrène dont la teneur en motifs styréniques est de 18 % et la teneur en dibloc SI est de 45%. Ledit film est fabriqué par co-extrusion par soufflage de gaine en vue de sa mise en oeuvre ultérieure dans un emballage refermable.

La demande EP 2123444 décrit un film complexe comprenant 2 couches minces de matériaux liées entre elles par une couche d'une composition adhésive à base de copolymères blocs styréniques dont l'épaisseur ne dépasse pas 10 µm. Ce film ne convient pas à la fabrication d'emballages refermables.

Un but de la présente invention est de proposer un film multicouche convenant à la fabrication d'emballage refermable et permettant d'abaisser la force de première ouverture de l'emballage, tout en maintenant substantiellement au même niveau la qualité de la refermeture subséquente (ou première refermeture).

Un autre but de la présente invention est de proposer un film multicouche permettant en outre d'améliorer également la qualité de la refermeture, notamment de la première refermeture.

Un autre but de la présente invention est de proposer un film multicouche permettant d'abaisser la force de première ouverture, tout en augmentant la force de deuxième ouverture.

Un autre but de la présente invention est de proposer un film multicouche permettant de réaliser les buts précédents à la température usuelle de conservation d'un emballage dans un réfrigérateur.

Un autre but de la présente invention est de proposer un film multicouche susceptible d'être fabriqué par co-extrusion à partir de matières premières conditionnées sous la forme de granulés, notamment par co-extrusion par soufflage de gaine, en vue de la fabrication d'un emballage refermable.

Il a à présent été trouvé que ces buts peuvent être obtenus, en totalité ou en partie, au moyen du film multicouche selon l'invention qui est décrit ci-après.

La présente invention a donc pour objet en premier lieu un film multicouche comprenant 2 couches minces de matériau thermoplastique liées entre elles par une couche continue, caractérisé en ce que ladite couche a une épaisseur comprise entre 7 et 300 µm et est constituée par une composition auto-adhésive thermofusible ayant un indice d'écoulement (ou MFI) allant de 0,01 à 100 g/10 minutes comprenant :
- de 40 à 70 % d'un mélange de copolymères blocs styréniques, ledit mélange ayant une teneur en motifs styréniques totale allant de 10 à 16 % et consistant de :
   - 55 à 90 % d'un ou plusieurs copolymères diblocs de type Styrène-Isoprène (SI), et de
   - 10 à 45 % d'un ou plusieurs copolymères triblocs linéaires Styrène-Isoprène-Styrène (SIS), et
- de 30 à 60 % d'une ou plusieurs résines tackifiantes ayant une température de ramollissement comprise entre 5 et 140 °C.

Les pourcentages ci-dessus ainsi que ceux, en l'absence d'indication contraire, utilisés de façon générale dans le présent texte pour exprimer des quantités correspondent à des pourcentages poids/poids. Il est également précisé que les pourcentages ci-dessus pour le mélange de copolymères blocs et la résine tackifiante, de même que les pourcentages indiqués pour des composants optionnels (précisés ultérieurement dans le présent texte) compris dans la composition auto-adhésive définie précédemment, sont des pourcentages relatifs au poids total de ladite composition.

L'indice d'écoulement (ou Melt Flow Index MFI) est mesuré à 190°C et pour un poids total de 2,16 kg, conformément à la condition d) de la norme ISO 1133. Le MFI est la masse de composition (préalablement placée dans un cylindre vertical) qui s'écoule en 10 minutes au travers d'une filière de diamètre fixé, sous l'effet d'une pression exercée par un piston chargé ayant le poids total de 2,16 kg. En l'absence de mention contraire les valeurs de MFI indiquées dans le présent texte ont été mesurées dans ces mêmes conditions.

Les compositions auto-adhésives thermofusibles ayant un MFI allant de 2 à 70 g/10 minutes sont plus particulièrement préférées.

Les copolymères SI et SIS utilisables dans la composition constituant la couche liante du film selon l'invention ont une masse molaire moyenne en poids M_{w} comprise entre 60 kDa et 400 kDa. En l'absence d'indication contraire, les masses molaires moyennes en poids M_{w} qui sont données dans le présent texte sont exprimées en dalton (Da) et sont déterminées par Chromatographie par Perméation de Gel, la colonne étant calibrée avec des étalons de polystyrène.

Selon une variante préférée du film multicouche selon l'invention, la teneur en diblocs SI du mélange de copolymères blocs styréniques peut varier de 55 à 80 %. Selon une autre variante préférée, ladite teneur peut varier de 60 à 80 %, et encore plus préférentiellement de 70 à 80 %.

Selon encore une autre variante préférée, la teneur en motifs styréniques globale du mélange de copolymères blocs styréniques peut varier de 13 à 16 %.

Les copolymères de type SIS et SI qui sont susceptibles d'être mis en oeuvre pour la préparation de la composition auto-adhésive thermofusible sont disponibles commercialement. Lesdits copolymères sont eux-mêmes disponibles sous la forme de mélanges tribloc/dibloc. Le Kraton® D1113BT de la société Kraton et le Quintac® 3520 de la société Zeon Chemicals sont des exemples de tels mélanges.

Le Kraton® D1113BT est un mélange dont la teneur en motifs styréniques globale est de 16 %, et qui est constitué de 45 % de copolymère tribloc SIS linéaire de M_{w} environ 250 kDa, et de 55 % de copolymère dibloc SI de M_{w} environ 100 kDa. Le Quintac® 3520 est un mélange qui est constitué, respectivement, de 22 % et de 78 % de tribloc SIS (M_{w} environ 300 kDa) et de dibloc SI (M_{w} environ 130 kDa), et dont la teneur totale en motifs styréniques est de 15 %.

Selon une autre variante préférée, la teneur de la composition en mélange de copolymères blocs styréniques est inférieure ou égale à 60 %. On obtient alors avantageusement une meilleure refermeture de l'emballage, se traduisant par une force de seconde ouverture plus élevée.

La ou les résines tackifiantes utilisables dans la composition ont des masses molaires moyennes en poids M_{w} généralement comprises entre 300 et 5000 Da et sont choisies notamment parmi :
- (i) les colophanes d'origine naturelle ou modifiées, telles que par exemple la colophane extraite de la gomme de pins, la colophane de bois extraite des racines de l'arbre et leurs dérivés hydrogénés, deshydrogénés, dimérisés, polymérisés ou estérifiés par des monoalcools ou des polyols comme le glycérol ;
- (ii) des résines obtenues par hydrogénation, polymérisation ou copolymérisation (avec un hydrocarbure aromatique) de mélanges d'hydrocarbures aliphatiques insaturés ayant environ 5, 9 ou 10 atomes de carbone issus de coupes pétrolières ;
- (iii) des résines terpéniques résultant généralement de la polymérisation d'hydrocarbures terpéniques comme par exemple le mono-terpène (ou pinène) en présence de catalyseurs de Friedel-Crafts, éventuellement modifiées par action de phénols ;
- (iv) des copolymères à base de terpènes naturels, par exemple le styrène/terpène, l'alpha-méthyl styrène/terpène et le vinyl toluène/terpène.

La température (ou point) de ramollissement des résines tackifiantes utilisables dans la composition selon l'invention peut varier de 5 à 140 °C. La température de ramollissement est déterminée conformément au test normalisé ASTM E 28 dont le principe est le suivant. Un anneau en laiton de diamètre environ 2 cm est rempli de la résine à tester à l'état fondu. Après refroidissement à température ambiante, l'anneau et la résine solide sont placés horizontalement dans un bain de glycérine thermostaté dont la température peut varier de 5° C par minute. Une bille d'acier de diamètre environ 9,5 mm est centrée sur le disque de résine solide. La température de ramollissement est -durant la phase de montée en température du bain à raison de 5°C par minute- la température à laquelle le disque de résine flue d'une hauteur de 25,4 mm sous le poids de la bille.

Selon une variante préférée, on utilise des résines tackifiantes aliphatiques, et encore plus préférentiellement des résines aliphatiques appartenant aux catégories (ii) ou (iii) pour lesquelles on peut citer comme exemples de résine disponible commercialement :
(ii) l'Escorez® 1310 LC disponible auprès de Exxon Chemicals qui est une résine obtenue par polymérisation d'un mélange d'hydrocarbures aliphatiques insaturés ayant environ 5 atomes de carbone, et qui possède une température de ramolissement de 94°C et un Mw d'environ 1800 Da ; l' Escorez® 5400 également de la société Exxon Chemicals qui est une résine obtenue par polymérisation, puis hydrogénation d'un mélange d'hydrocarbures aliphatiques insaturés ayant environ 9 ou 10 atomes de carbone et qui possède une température de ramolissement de 100°C et un Mw d'environ 570 Da ;
(iii) la Dercolyte® S115 disponible auprès de la société « Dérivés Résiniques et Terpéniques ou DRT) qui une résine terpène ayant une température de ramollissement de 115°C et un Mw d'environ 2300 Da.

La composition adhésive mise en oeuvre dans le film multicouche selon l'invention comprend de préférence de 50 à 70 % du mélange de copolymères diblocs SI et triblocs SIS et de 30 % à 50 % de la (ou des) résine tackifiante.

La composition adhésive peut également comprendre de 0,1 à 2 % d'un ou plusieurs stabilisants (ou anti-oxydant). Ces composés sont introduits pour protéger la composition d'une dégradation résultant d'une réaction avec de l'oxygène qui est susceptible de se former par action de la chaleur, de la lumière ou de catalyseurs résiduels sur certaines matières premières telles que les résines tackifiantes. Ces composés peuvent inclure des anti-oxydants primaires qui piègent les radicaux libres et sont généralement des phénols substitués comme l'Irganox® 1010 de CIBA. Les anti-oxydants primaires peuvent être utilisés seuls ou en combinaison avec d'autres anti-oxydants tels que des phosphites comme l'Irgafos® 168 également de CIBA, ou encore avec des stabilisants UV tels que des amines.

La composition adhésive peut également comprendre un plastifiant, mais dans une quantité ne dépassant pas 5 %. On peut utiliser comme plastifiant une huile paraffinique et naphténique (comme le Primol® 352 de la société ESSO) comprenant éventuellement des composés aromatiques (comme le Nyflex 222B).

La composition adhésive peut enfin comprendre des charges minérales ou organiques, des pigments ou des colorants.

Selon une variante de l'invention, l'épaisseur de la couche adhésive liante est comprise entre 10 et 300 µm, de préférence entre 10 et 50 µm, et encore plus préférentiellement entre 10 et 30 µm.

Ladite couche adhésive permet la liaison entre une couche mince complexable et une couche mince scellable et sécable.

La couche complexable peut être complexée (ou contre-collée) avec d'autres couches pour la réalisation de l'emballage, par exemple avec une couche rigide pour la réalisation du réceptacle.

La couche scellable et sécable permet d'assurer, au niveau du pourtour le long duquel le réceptacle est lié par soudure à l'opercule, la première ouverture de l'emballage, au moyen d'une zone fragilisée sécable. Après ouverture, la zone fragilisée laisse apparaître :
- la couche adhésive mère sur la bande d'opercule et/ou sur la bande de réceptacle qui étaient en contact dans l'emballage fermé, et/ou
- 2 couches adhésives filles résultant de la rupture de la couche adhésive mère et localisées sur la bande d'opercule et/ou la bande de réceptacle.

Le matériau utilisable pour constituer les 2 couches minces liées entre elle par la couche adhésive liante est généralement un polymère thermoplastique (identique ou différent pour les 2 couches) tel que :
- le polyéthylène (PE),
- le polypropylène (PP),
- un copolymère à base d'éthylène et de propylène,
- le polyamide (PA),
- le polyéthylènetéréphtalate (PET), ou encore
- un copolymère à base d'éthylène comme par exemple un copolymère greffé anhydride maléïque, un copolymère d'éthylène et d'acétate de vinyle (EVA), un copolymère d'éthylène et d'alcool vinylique (EVOH), un copolymère d'éthylène et d'un acrylate d'alkyle tel que l'acrylate de méthyle (EMA) ou de butyle (EBA),
- le polystyrène (PS),
- le polychlorure de vinyle (PVC),
- le polyfluorure de vinylidène (PVDF),
- un polymère d'acide lactique (PLA), ou
- un polyhydroxyalkanoate (PHA).

Selon une variante de réalisation, le film multicouche selon l'invention est un film tricouche constitué par la couche adhésive et les 2 couches adjacentes.

Selon une autre variante de réalisation, le film multicouche selon l'invention comprend, outre les 2 couches minces adjacentes à la couche adhésive, d'autres couches minces nécessaires à la réalisation de l'emballage, comme par exemple :
- une couche rigide nécessaire à la tenue mécanique du réceptacle, ou
- une couche imprimable, ou encore
- une couche à effet barrière contre l'oxygène, la vapeur d'eau ou bien le monoxyde de carbone.

Les matériaux utilisables pour constituer lesdites couches peuvent être identiques ou différents et comprennent en général des polymères thermoplastiques qui peuvent être choisis parmi les polymères cités précédemment pour les 2 couches minces adjacentes.

L'épaisseur des 2 couches minces adjacentes à la couche adhésive et des autres couches mises en oeuvre dans le film multicouche selon l'invention est susceptible de varier dans un large domaine allant de 5 à 150 µm.

Le film multicouche selon l'invention peut être fabriqué par dépôt d'une quantité appropriée de composition selon l'invention sur une des 2 couches minces de matériau, puis application de la 2^{ème} couche mince et pressage à chaud. Il peut également être fabriqué par co-extrusion.

La présente invention concerne encore un procédé de fabrication du film multicouche tel que défini précédemment, caractérisé en ce qu'il comprend la co-extrusion de la composition auto-adhésive thermofusible avec les matériaux des 2 couches minces adjacentes.

De préférence, la composition auto-adhésive thermofusible ainsi que les matériaux constitutifs des 2 couches minces sont alimentés dans le dispostif de co-extrusion sous la forme de granulés de taille comprise entre 1 et 10 mm, de préférence entre 2 et 5 mm. La composition auto-adhésive mise en oeuvre dans le film multicouche selon l'invention permet, de façon particulièrement avantageuse, d'assurer à la fois les propriétés requises pour ledit film et la possibilité d'une présentation de ladite composition sous la forme des granulés précités.Les autres couches éventuellement comprises dans le film multicouche peuvent être obtenues soit par l'incorporation dans le dispositif de co-extrusion des matériaux constitutifs correspondants sous la forme de granulés de même taille, soit par un procédé de complexage du film directement issu de la co-extrusion.

La composition adhésive peut être préparée, sous cette forme de granulés, par simple mélange des ingrédients à chaud, entre 150 et 200°C, de préférence à environ 160°C, au moyen d'une extrudeuse à 2 vis muni d'un outil de découpe du produit extrudé en sortie de la filière

Le procédé de co-extrusion par soufflage de gaine est plus particulièrement préféré, notamment pour la fabrication d'un film multicouche dans lequel l'épaisseur de la couche adhésive est comprise entre 7 et 50 µm, de préférence entre 10 et 50 µm, et encore plus préférentiellement entre 10 et 30 µm.

La présente invention concerne encore l'utilisation du film multicouche tel que décrit précédemment pour la fabrication de barquettes refermables, de préférence pour la fabrication du film d'operculage.

Les exemples suivants sont donnés à titre purement illustratif de l'invention, et ne sauraient en aucun cas être interprétés pour en limiter la portée.

### Exemple 1 :

La composition adhésive indiquée dans le tableau suivant, à laquelle on rajoute 0,5 % d'Irganox® 1010, est préparée sous la forme d'un liquide visqueux à 160°C, par simple mélange des ingrédients à cette température, au moyen d'une extrudeuse à 2 vis.

Le MFI est indiqué dans le tableau.

### Mesure de la force de première ouverture par pelage à 5°C :

Un film multicouche incluant une couche adhésive constituée de ladite composition est préparé de la façon suivante.

On place environ 8 g de la composition adhésive sur une feuille carrée de PET de 15 cm de côté et 50 µm d'épaisseur. On applique alors une deuxième feuille de PET identique à la première, et l'on exerce sur l'ensemble, à une température de 120°C, une pression de 100 kg/cm² durant 2 minutes, au moyen d'une presse hydraulique. L'épaisseur de la couche adhésive dans le film multicouche, contrôlée au pied à coulisse, est d'environ 250 µm.

On découpe dans le film multicouche ainsi obtenu une éprouvette rectangulaire de 1 cm sur 10 cm sur laquelle on procède au test de pelage à 180°. Pour cela, on décolle à partir de l'une des 2 extrémités de cette éprouvette, et sur environ 2 cm, les 2 couches de film PET comprises dans cette bande et les 2 extrémités libres obtenues sont fixées sur deux dispositifs d'attache (appelés mors) reliés, respectivement, à une partie fixe et une partie mobile d'un appareil de traction qui sont situées sur un axe vertical.

Alors qu'un mécanisme d'entraînement communique à la partie mobile une vitesse uniforme de 100 mm/minute, conduisant au décollement des 2 couches de PET dont les extrémités décollées se déplacent progressivement selon un axe vertical en formant un angle de 180°, un capteur de force relié à ladite partie mobile mesure la force supportée par l'éprouvette ainsi maintenue. L'ensemble constitué par l'éprouvette, le mors fixe et le mors mobile auxquels elle est fixée, est placé dans une enceinte thermostatique maintenue à une température de 5°C, de sorte que le décollement est effectué après stabilisation à cette température.

Le résultat est exprimé en N/cm.

### Mesure de la force de deuxième ouverture par pelage à 5°C :

Les 2 couches de PET de l'éprouvette précédente sont, après leur décollement, repositionnées en regard l'une de l'autre et mises en contact manuellement. Elles sont alors soumises à une pression exercée au moyen d'un rouleau de masse 2 kg avec lequel on procède à un mouvement d'aller-retour selon une direction parallèle à la longueur de l'éprouvette.

On répète alors le test de pelage précédent sur le multicouche ainsi obtenu après 15 minutes de stabilisation à 5°C.

Le résultat est exprimé en N/cm.

### Exemple 2-5 :

On répète l'exemple 1 en utilisant, pour les ingrédients de la compositions, les teneurs indiquées dans le tableau.

Les forces de 1^{ère} et 2^{ème} ouverture obtenues sont également indiquées dans le tableau.

### Exemple A (comparatif) :

On répète l'exemple 1 en utilisant un mélange de Kraton® D1111 et de Kraton® D1113BT dans les proportions indiquées, de sorte à obtenir la composition exemplifiée par la demande WO 02/064694.

On observe que la force de 1^{ère} ouverture des exemples 1 à 5 est abaissée par rapport à celle de l'exemple A, indiquant une ouverture plus facile de l'emballage refermable. Les exemples 2 à 4 présentent, de plus, une augmentation significative de la force de 2^{ème} ouverture par rapport à celle de l'exemple A, ce qui traduit une amélioration de la qualité de la refermeture de l'emballage une fois ouvert.

**Tableau**

| Ingrédient | Teneur en % | | | | | |
|---|---|---|---|---|---|---|
| | Exemple 1 | Exemple 2 | Exemple 3 | Exemple 4 | Exemple 5 | Exemple A |
| Quintac® 3520 | 65 | 60 | 60 | 55 | | - |
| Kraton® D1111 | - | - | - | - | | 18 |
| Kraton® D1113BT | - | - | - | - | 60 | 47 |
| Escorez® 1310 LC | 17,5 | 20 | 25 | 22,5 | 25 | 17,5 |
| Dercolyte® S115 | 17,5 | 20 | 15 | 22,5 | 15 | 17,5 |

| MFI | 20 | 23 | 27 | 35 | 57 | 21 |
|---|---|---|---|---|---|---|
| Teneur du mélange de copolymères blocs styréniques en motifs styréniques | 15 | 15 | 15 | 15 | 16 | 18 |
| Teneur du mélange de copolymères blocs styréniques en diblocs | 78 | 78 | 78 | 78 | 56 | 45 |
| Force de 1ère ouverture à 5°C (N/cm) | 25 | 30 | 33 | 35 | 36 | 43 |
| Force de 2ème ouverture à 5°C (N/cm) | 18 | 22 | 24 | 24 | 20 | 21 |

## Revendications

1. Film multicouche comprenant 2 couches minces de matériau thermoplastique liées entre elles par une couche continue, **caractérisé en ce que** ladite couche a une épaisseur comprise entre 7 et 300 µm et est constituée par une composition auto-adhésive thermofusible ayant un indice d'écoulement (ou MFI) allant de 0,01 à 100 g/10 minutes comprenant relativement au poids total de ladite composition:
- de 40 à 70 % d'un mélange de copolymères blocs styréniques, ledit mélange ayant une teneur en motifs styréniques totale allant de 10 à 16 % et consistant de :
- 55 à 90 % d'un ou plusieurs copolymères diblocs de type Styrène-Isoprène (SI), et de
- 10 à 45 % d'un ou plusieurs copolymères triblocs linéaires Styrène-Isoprène-Styrène (SIS), et
- de 30 à 60 % d'une ou plusieurs résines tackifiantes ayant une température de ramollissement comprise entre 5 et 140 °C ;
ledit MFI étant mesuré à 190°C et pour un poids total de 2,16 kg, conformément à la condition d) de la norme ISO 1133.

2. Film multicouche selon la revendication 1, **caractérisé en ce que** la composition auto-adhésive a un MFI allant de 2 à 70 g/10 minutes

3. Film multicouche selon l'une des revendications 1 à 2, **caractérisé en ce que** la teneur en diblocs SI du mélange de copolymères blocs styréniques varie de 55 à 80 %.

4. Film multicouche selon l'une des revendications 1 à 3, **caractérisé en ce que** la teneur de la composition en mélange de copolymères blocs styréniques est inférieure ou égale à 60 %.

5. Film multicouche selon l'une des revendications 1 à 4, **caractérisé en ce que** la résine tackifiante a une masse molaire moyenne en poids M_{w} comprise entre 300 et 5000 Da et est choisie parmi :
- (i) les colophanes d'origine naturelle ou modifiées, telles que par exemple la colophane extraite de la gomme de pins, la colophane de bois extraite des racines de l'arbre et leurs dérivés hydrogénés, deshydrogénés, dimérisés, polymérisés ou estérifiés par des monoalcools ou des polyols comme le glycérol ;
- (ii) des résines obtenues par hydrogénation, polymérisation ou copolymérisation (avec un hydrocarbure aromatique) de mélanges d'hydrocarbures aliphatiques insaturés ayant environ 5, 9 ou 10 atomes de carbone issus de coupes pétrolières ;
- (iii) des résines terpéniques résultant généralement de la polymérisation d'hydrocarbures terpéniques comme par exemple le mono-terpène (ou pinène) en présence de catalyseurs de Friedel-Crafts, éventuellement modifiées par action de phénols ;
- (iv) des copolymères à base de terpènes naturels, par exemple le styrène/terpène, l'alpha-méthyl styrène/terpène et le vinyl toluène/terpène.

6. Film multicouche selon l'une des revendications 1 à 5, **caractérisé en ce que** la résine tackifiante est aliphatique.

7. Film multicouche selon la revendication 6, **caractérisé en ce que** la résine appartient aux catégories (ii) ou (iii).

8. Film multicouche selon l'une des revendications 1 à 7, **caractérisé en ce que** la composition auto-adhésive comprend un plastifiant dans une quantité ne dépassant pas 5%.

9. Film multicouche selon l'une des revendications 1 à 8, **caractérisé en ce que** l'épaisseur de la couche adhésive liante est comprise entre 10 et 300 µm.

10. Film multicouche selon l'une des revendications 1 à 9, **caractérisé en ce que** l'épaisseur de la couche adhésive liante est comprise entre 10 et 50 µm.

11. Film tricouche tel que défini dans l'une des revendications 1 à 10.

12. Procédé de fabrication du film multicouche tel que défini dans l'une des revendications 1 à 11, **caractérisé en ce qu'**il comprend la co-extrusion de la composition auto-adhésive thermofusible avec les matériaux des 2 couches minces adjacentes.

13. Procédé de fabrication du film multicouche selon la revendication 12, **caractérisé en ce que** la composition auto-adhésive thermofusible ainsi que les matériaux constitutifs des 2 couches minces sont alimentés dans le dispostif de co-extrusion sous la forme de granulés de taille comprise entre 1 et 10 mm.

14. Procédé de fabrication du film multicouche selon l'une des revendications 12 ou 13, **caractérisé en ce que** la co-extrusion est réalisée par soufflage de gaine.

15. Utilisation du film multicouche tel que défini dans l'une des revendications 1 à 11 pour la fabrication de barquettes refermables.

## Patentansprüche

1. Mehrschichtfolie, umfassend 2 dünne Schichten aus thermoplastischem Material, die durch eine kontinuierliche Schicht miteinander verbunden sind, **dadurch gekennzeichnet, dass** die Schicht eine Dicke zwischen 7 und 300 µm aufweist und aus einer selbstklebenden Schmelzklebstoffzusammensetzung besteht, die einen Schmelzindex (oder MFI) im Bereich von 0,01 bis 100 g/10 Minuten aufweist, die bezogen auf das Gesamtgewicht der Zusammensetzung Folgendes umfasst:
- von 40 bis 70 % einer Mischung aus Styrol-Blockcopolymeren, wobei die Mischung einen Gesamtgehalt an Styrol-Einheiten im Bereich von 10 bis 16 % aufweist und aus Folgendem besteht:
- 55 bis 90 % eines oder mehrerer Diblockcopolymere des Typs des Styrol-Isopren-Blockcopolymers (SI) und
- 10 bis 45 % eines oder mehrerer linearer Styrol-Isopren-Styrol-Triblockcopolymere (SIS) und
- von 30 bis 60 % eines oder mehrerer klebrigmachender Harze mit einer Erweichungstemperatur zwischen 5 und 140 °C;
wobei der MFI bei 190 °C und für ein Gesamtgewicht von 2,16 kg gemäß der Bedingung d) der Norm ISO 1133 gemessen wird.

2. Mehrschichtfolie nach Anspruch 1, **dadurch gekennzeichnet, dass** die selbstklebende Zusammensetzung einen MFI im Bereich von 2 bis 70 g/10 Minuten aufweist.

3. Mehrschichtfolie nach einem der Ansprüche 1 bis 2, **dadurch gekennzeichnet, dass** der Gehalt an SI-Diblöcken der Mischung aus Styrol-Blockcopolymeren von 55 von 80 % variiert.

4. Mehrschichtfolie nach einem der Ansprüche 1 bis 3, **dadurch gekennzeichnet, dass** der Gehalt der Zusammensetzung an Mischung aus Styrol-Blockcopolymeren niedriger als oder gleich 60 % ist.

5. Mehrschichtfolie nach einem der Ansprüche 1 bis 4, **dadurch gekennzeichnet, dass** das klebrigmachende Harz eine gewichtsmittlere molare Masse M_{w} aufweist, die zwischen 300 und 5.000 Da beträgt und ausgewählt ist aus:
(i) den Kolophoniumstoffen, die natürlichen Ursprungs oder modifiziert sind, wie zum Beispiel das aus Kieferngummi extrahierte Kolophonium, das aus Baumwurzeln extrahierte Holz-Kolophonium, und ihren hydrierten, dehydrierten, dimerisierten, polymerisierten oder mit Monoalkoholen oder Polyolen, wie Glycerol, veresterten Derivaten;
(ii) Harzen, die durch Hydrierung, Polymerisation oder Copolymerisation (mit einem aromatischen Kohlenwasserstoff) von Mischungen von aliphatischen ungesättigten Kohlenwasserstoffen mit etwa 5, 9 oder 10 Kohlenstoffatomen, die aus Erdölschnitten hervorgegangen sind, erhalten sind;
(iii) Terpenharzen, die im Allgemeinen aus der Polymerisation von Terpenkohlenwasserstoffen, wie zum Beispiel Monoterpen (oder Pinen), in Gegenwart von Friedel-Crafts-Katalysatoren resultieren, die eventuell durch Einwirkung von Phenolen modifiziert sind;
(iv) Copolymeren auf Basis von natürlichen Terpenen, beispielsweise Styrol/Terpen, alpha-Methylstyrol/Terpen und Vinyltoluol/Terpen.

6. Mehrschichtfolie nach einem der Ansprüche 1 bis 5, **dadurch gekennzeichnet, dass** das klebrigmachende Harz aliphatisch ist.

7. Mehrschichtfolie nach Anspruch 6, **dadurch gekennzeichnet, dass** das Harz zu den Kategorien (ii) oder (iii) gehört.

8. Mehrschichtfolie nach einem der Ansprüche 1 bis 7, **dadurch gekennzeichnet, dass** die selbstklebende Zusammensetzung einen Weichmacher in einer Menge von nicht mehr als 5 % aufweist.

9. Mehrschichtfolie nach einem der Ansprüche 1 bis 8, **dadurch gekennzeichnet, dass** die Dicke der Klebstoffbindeschicht zwischen 10 und 300 µm liegt.

10. Mehrschichtfolie nach einem der Ansprüche 1 bis 9, **dadurch gekennzeichnet, dass** die Dicke der Klebstoffbindeschicht zwischen 10 und 50 µm liegt.

11. Dreischichtige Folie, wie in einem der Ansprüche 1 bis 10 definiert.

12. Verfahren zur Herstellung der Mehrschichtfolie, wie in einem der Ansprüche 1 bis 11 definiert, **dadurch gekennzeichnet, dass** es das Coextrudieren der selbstklebenden Schmelzklebstoffzusammensetzung mit 2 benachbarten dünnen Schichten aufweist.

13. Verfahren zur Herstellung der Mehrschichtfolie nach Anspruch 12, **dadurch gekennzeichnet, dass** die selbstklebende Schmelzklebstoffzusammensetzung und die Materialien, aus denen die 2 dünnen Schichten bestehen, der Vorrichtung zum Coextrudieren in Form von Granulat von einer Größe zwischen 1 und 10 mm zugeführt werden.

14. Verfahren zur Herstellung der Mehrschichtfolie nach einem der Ansprüche 12 oder 13, **dadurch gekennzeichnet, dass** das Coextrudieren durch Schlauchblasen durchgeführt wird.

15. Verwendung einer Mehrschichtfolie, wie in einem der Ansprüche 1 bis 11 definiert, für die Herstellung von wiederverschließbaren Schalen.

## Claims

1. Multilayer film comprising 2 thin layers of thermoplastic material bonded to one another by a continuous layer, **characterized in that** said layer has a thickness of between 7 and 300 µm and is composed of a hot-melt pressure-sensitive adhesive composition having a melt flow index (or MFI) ranging from 0.01 to 100 g/10 minutes comprising, with respect to the total weight of said composition:
- from 40 to 70% of a mixture of styrene block copolymers, said mixture having a total content of styrene units ranging from 10 to 16% and consisting of:
- from 55 to 90% of one or more diblock copolymers of Styrene/Isoprene (SI) type, and of
- from 10 to 45% of one or more linear Styrene/Isoprene/Styrene (SIS) triblock copolymers, and
- from 30 to 60% of one or more tackifying resins having a softening temperature of between 5 and 140°C; said MFI being measured at 190°C and for a total weight of 2.16 kg, in accordance with condition d) of the standard ISO 1133.

2. Multilayer film according to Claim 1, **characterized in that** the pressure-sensitive adhesive composition has an MFI ranging from 2 to 70 g/10 minutes.

3. Multilayer film according to either of Claims 1 and 2, **characterized in that** the content of SI diblocks of the mixture of styrene block copolymers varies from 55 to 80%.

4. Multilayer film according to one of Claims 1 to 3, **characterized in that** the content of mixture of styrene block copolymers of the composition is less than or equal to 60%.

5. Multilayer film according to one of Claims 1 to 4, **characterized in that** the tackifying resin has a weight-average molar mass M_{w} of between 300 and 5000 Da and is chosen from:
- (i) rosins of natural or modified origin, such as, for example, the rosin extracted from pine gum, wood rosin extracted from tree roots and their derivatives which are hydrogenated, dehydrogenated, dimerized, polymerized or esterified by monoalcohols or polyols, such as glycerol;
- (ii) resins obtained by hydrogenation, polymerization or copolymerization (with an aromatic hydrocarbon) of mixtures of unsaturated aliphatic hydrocarbons having approximately 5, 9 or 10 carbon atoms resulting from petroleum fractions;
- (iii) terpene resins generally resulting from the polymerization of terpene hydrocarbons, such as, for example, monoterpene (or pinene), in the presence of Friedel-Crafts catalysts, which are optionally modified by the fraction of phenols;
- (iv) copolymers based on natural terpenes, for example styrene/terpene, α-methylstyrene/terpene and vinyltoluene/terpene.

6. Multilayer film according to one of Claims 1 to 5, **characterized in that** the tackifying resin is aliphatic.

7. Multilayer film according to Claim 6, **characterized in that** the resin belongs to the categories (ii) or (iii).

8. Multilayer film according to one of Claims 1 to 7, **characterized in that** the pressure-sensitive adhesive composition comprises a plasticizer in an amount not exceeding 5%.

9. Multilayer film according to one of Claims 1 to 8, **characterized in that** the thickness of the bonding adhesive layer is between 10 and 300 µm.

10. The multilayer film according to one of Claims 1 to 9, **characterized in that** the thickness of the bonding adhesive layer is between 10 and 50 µm.

11. Three-layer film as defined in one of Claims 1 to 10.

12. Process for the manufacture of the multilayer film as defined in one of Claims 1 to 11, **characterized in that** it comprises the coextrusion of the hot-melt pressure-sensitive adhesive composition with the materials of the 2 adjacent thin layers.

13. Process for the manufacture of the multilayer film according to Claim 12, **characterized in that** the hot-melt pressure-sensitive adhesive composition and the constituent materials of the 2 thin layers are fed into the coextrusion device in the form of granules with a size of between 1 and 10 mm.

14. Process for the manufacture of the multilayer film according to either of Claims 12 and 13, **characterized in that** the coextrusion is carried out by blown film coextrusion.

15. Use of the multilayer film as defined in one of Claims 1 to 11 for the manufacture of resealable cartons.
